# EUROPÄISCHE PATENTSCHRIFT

(11) **EP 0 879 789 B1**
(45) Veröffentlichungstag und Bekanntmachung des Hinweises auf die Patenterteilung: **06.09.2000**
(21) Anmeldenummer: 98108328.0
(22) Anmeldetag: 07.05.1998
(51) Int. Cl.: C01B 3/32

(54) **Katalysatorschicht für die Wasserdampfreformierung von Methanol**
Catalyst layer for the steam reforming of methanol
Couche de catalyseur pour le reformage à la vapeur de méthanol

(30) Priorität: 24.05.1997 DE 19721751
(43) Veröffentlichungstag der Anmeldung: 25.11.1998
(73) Patentinhaber: XCELLSIS GmbH, 73230 Kirchheim / Teck-Nabern (DE)
(72) Erfinder: Autenrieth, Rainer, 89155 Erbach (DE)

(56) Entgegenhaltungen:
- DD-A- 158 464
- DE-A- 4 031 514
- DE-C- 19 534 433
- US-A- 4 027 476
- US-A- 4 127 691
- US-A- 4 743 578
- PATENT ABSTRACTS OF JAPAN vol. 096, no. 012, 26. Dezember 1996 & JP 08 196906 A (MATSUSHITA ELECTRIC IND CO LTD), 6. August 1996

## Beschreibung

Die Erfindung betrifft eine Katalysatorschicht für die Wasserdampfreformierung von Methanol.

Schichtförmige Katalysatoren für die Wasserdampfreformierung von Kohlenwasserstoffen bzw. Derivaten von Kohlenwasserstoffen, insbesondere Methanol, sind z.B. aus der **DE 44 20 752 A2, DE 44 23 587 A1** oder der **DE 2741 708 A1** bekannt. Dabei sind in der genannten **DE 44 23 587 A1** auch Katalysatoren auf Kupfer- und Zinkbasis genannt.

Die **DE 195 34 433 C1** offenbart eine Katalysatorschichtstruktur für einen Methanolreformierungsreaktor. Die Schichtstruktur umfaßt eine verdichtete Metallschaum-Trägerschicht, in deren Poren der Katalysator fixiert ist. Auf einer Seite der Trägerschicht ist eine Oberflächenstrukturierung aus regelmäßig angeordneten Erhebungen eingeprägt.

Beim Betrieb von Katalysatorschichten für die Wasserdampfreformierung von Methanol, insbesondere Cu- oder Zn-Katalysatoren, kommt es zu einem Schrumpfen des Volumens um bis zu 40%. Dieser Schrumpfungsvorgang führt bei fest angebrachten Katalysatorschichten leicht zu einem Abplatzen oder Ablösen der Katalysatorschicht von der Trägeroberfläche. Dies wiederum führt zu einer erhöhten Staubbildung und zu einem unerwünschten Aktivitätsrückgang.

Aufgabe der Erfindung ist es, einen schichtförmigen Katalysator anzugeben, mit dem ein Abplatzen oder Ablösen von der Trägeroberfläche vermieden werden kann.

Diese Aufgabe wird mit der Katalysatorschicht nach Anspruch 1 gelöst. Vorteilhafte Ausführungen der Erfindung sind Gegenstände weiterer Ansprüche.

Erfindungsgemäß weist die Katalysatorschicht Dehnungsfugen auf. Dadurch kann der Volumenschwund des Katalysators beim Betrieb ausgeglichen werden. Es kommt zu geringeren Spannungen innerhalb des Katalysators und somit zu einer geringeren Ablösung der Katalysatorschicht.

In Ausführungen, in denen die Ausdehnung der Katalysatorschicht in einer Koordinatenrichtung gering ist, kann die Ausrichtung der Dehnungsfugen in nur eine Koordinatenrichtung genügen, z.B. ein Satz paralleler Dehnungsfugen.
Damit der Volumenschwund des Katalysators in beliebige Richtungen ausgeglichen werden kann, weisen die Dehnungsfugen vorteilhaft Richtungskomponenten in zwei Koordinatenrichtungen auf. Sie bilden bevorzugt eine zweidimensionale Struktur aus sich kreuzenden Dehnungsfugen.

Die Dehnungsfugen können insbesondere einen geradlinigen Verlauf aufweisen. Möglich sind jedoch auch sonstige Formen, z.B. gekrümmte oder gezackte Formen.

In einer vorteilhaften Ausführung bilden die Dehnungsfugen ein zweidimensionales, regelmäßiges Muster.

Es kann vorteilhaft ein netzartiges Muster verwendet werden. Dabei sind zwei Gruppen von Dehnungsfugen vorhanden, wobei die Dehnungsfugen innerhalb jeder Gruppe parallel zueinander verlaufen und die Dehnungsfugen aus verschiedenen Gruppen sich unter einem beliebigen Winkel, z.B. 90° schneiden.

Die Erfindung eignet sich insbesondere für Cu, Zn-Katalysatoren, sie kann jedoch für beliebige andere Katalysatoren zur Wasserdampfreformierung von Methanol angewandt werden.

Ein Ausführungsbeispiel der Erfindung wird anhand einer Fig. näher erläutert. Es zeigt eine erfindungsgemäße Katalysatorschicht in Draufsicht (oben) und im Querschnitt (unten).
Die Katalysatorschicht 3 ist auf einem ebenen Blech 5 angeordnet. Als Träger sind beliebige andere, z.B. gekrümmte Strukturen möglich. Die geradlinigen Dehnungsfugen 1 bilden ein netzartiges Muster aus sich schneidenden Dehnungsfugen 1. Die zweidimensionale Struktur der Dehnfugen bewirkt, daß der Volumenschwund des Katalysatormaterials in zwei aufeinander senkrecht stehenden Koordinatenrichtungen (entlang der Kanten der Katalysatorschicht 3) kompensiert wird. Der Schnittwinkel beträgt in dieser Ausführung gerade 90°, wobei jedoch auch beliebige andere Schnittwinkel möglich sind. Die Abstände zwischen den parallelen Dehnungsfugen 1 kann sowohl regelmäßig als auch unregelmäßig gewählt werden. Wie man aus der Querschnittdarstellung erkennt, weisen die Dehnungsfugen 1 in diesem Beispiel einen trapezförmigen Querschnitt auf. Mögliche andere Querschnittsformen sind z.B. quadratisch, rechtwinklig oder bogenförmig.

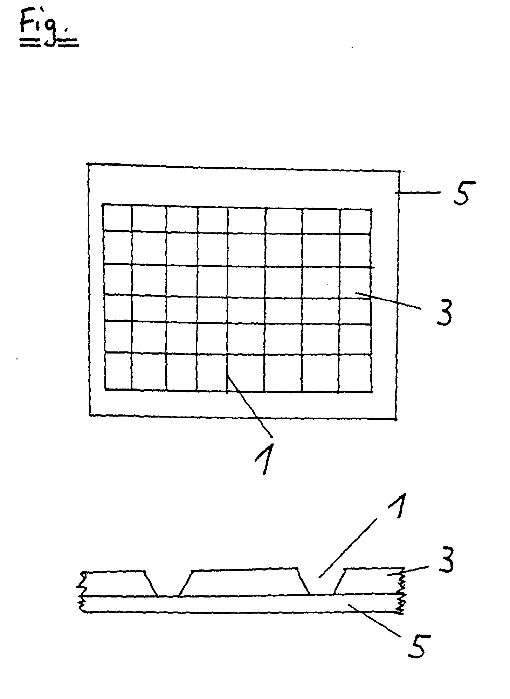

## Patentansprüche

1. Katalysatorschicht (3) für die Wasserdampfreformierung von Methanol, **dadurch gekennzeichnet**, daß die Katalysatorschicht (3) Dehnungsfugen (1) aufweist, um den Volumenschwund der Katalysatorschicht (3) beim Betrieb auszugleichen.

2. Katalysatorschicht nach Anspruch 1, **dadurch gekennzeichnet**, daß die Dehnungsfugen (1) Richtungskomponenten in zwei Koordinatenrichtungen aufweisen.

3. Katalysatorschicht nach Anspruch 1 oder 2, **dadurch gekennzeichnet,** daß Dehnungsfugen (1) sich kreuzen.

4. Katalysatorschicht nach einem der vorangehenden Ansprüche, **dadurch gekennzeichnet**, daß die Dehnungsfugen (1) sich unter einem Winkel von 90° kreuzen.

5. Katalysatorschicht nach einem der vorangehenden Ansprüche, **dadurch gekennzeichnet**, daß die Dehnungsfugen (1) geradlinig verlaufen.

6. Katalysatorschicht nach einem der vorangehenden Ansprüche, **dadurch gekennzeichnet**, daß die Dehnungsfugen (1) ein regelmäßiges, zweidimensionales Muster bilden.

7. Katalysatorschicht nach einem der vorangehenden Ansprüche, **dadurch gekennzeichnet,** daß die Dehnungsfugen (1) eine netzartiges Muster bilden.

8. Katalysatorschicht nach einem der vorangehenden Ansprüche, **dadurch gekennzeichnet,** daß die Dehnungsfugen (1) einen trapezförmigen Querschnitt aufweisen.

## Claims

1. A catalyst layer (3) for the steam reforming of methanol **characterised in that** the catalyst layer (3) has expansion stages (1) to equalise the volume shrinkage of the catalyst layer (3) during operation.

2. A catalyst layer in accordance with Claim 1 **characterised in that** the expansion joints (1) have directional components running in two coordinate directions.

3. A catalyst layer in accordance with Claim 1 or 2 **characterised in that** the expansion joints (1) cross over.

4. A catalyst layer in accordance with one of the preceding claims **characterised in that** the expansion joints (1) cross at an angle of 90°.

5. A catalyst layer in accordance with one of the preceding claims **characterised in that** the expansion joints (1) run in straight lines.

6. A catalyst layer in accordance with one of the preceding claims **characterised in that** the expansion joints (1) form a regular, two-dimensional pattern.

7. A catalyst layer in accordance with one of the preceding claims **characterised in that** the expansion joints form a mesh-like pattern.

8. A catalyst layer in accordance with one of the preceding claims **characterised in that** the expansion joints (1) have a trapezoid cross section.

## Revendications

1. Couche de catalyseur (3) pour le reformage à la vapeur d'eau du méthanol, caractérisée en ce que la couche de catalyseur (3) présente des joints de dilatation (1), afin de compenser en fonctionnement le retrait volumique de la couche de catalyseur (3).

2. Couche de catalyseur selon la revendication 1, caractérisée en ce que les joints de dilatation (1) présentent des composantes directionnelles orientées dans deux directions de coordonnées.

3. Couche de catalyseur selon la revendication 1 ou 2, caractérisée en ce que les joints de dilatation (1) se croisent.

4. Couche de catalyseur selon l'une des revendications précédentes, caractérisée en ce que les joints de dilatation (1) se croisent sous un angle de 90°.

5. Couche de catalyseur selon l'une des revendications précédentes, caractérisée en ce que les joints de dilatation (1) s'étendent en ligne droite.

6. Couche de catalyseur selon l'une des revendications précédentes, caractérisée en ce que les joints de dilatation (1) constituent un motif régulier, bidimensionnel.

7. Couche de catalyseur selon l'une des revendications précédentes, caractérisée en ce que les joints de dilatation (1) constituent un motif du genre d'un réseau ou filet.

8. Couche de catalyseur selon l'une des revendications précédentes, caractérisée en ce que les joints de dilatation (1) ont une section transversale trapézoïdale.
